# EUROPEAN PATENT SPECIFICATION

(11) **EP 4 666 359 B1**
(45) Date of publication and mention of the grant of the patent: **22.07.2026**
(21) Application number: 24711245.1
(22) Date of filing: 12.02.2024
(51) Int. Cl.: H02G 3/32, F16B 23/00, F16H 25/20

(54) **SECURING DEVICE FOR SECURING A CABLE OR CABLE BUNDLE TO A SUPPORT**
BEFESTIGUNGSVORRICHTUNG ZUR BEFESTIGUNG EINES KABELS ODER KABELBÜNDELS AN EINEM TRÄGER
DISPOSITIF DE FIXATION POUR FIXER UN CÂBLE OU UN FAISCEAU DE CÂBLES À UN SUPPORT

(30) Priority: 13.02.2023 ES 202330226 U
(43) Date of publication of application: 24.12.2025
(73) Proprietor: Unex Aparellaje Electrico S.L., 08005 Barcelona (ES)
(72) Inventor: MOSTAZO OVIEDO, José Antonio, 08005 Barcelona (ES)
(74) Representative: Curell Suñol S.L.P.
(86) International application number: PCT/ES2024/070074
(87) International publication number: WO 2024/170808

(56) References cited:
- EP-B1- 2 501 004
- CN-U- 204 493 390
- ES-U- 1 164 633

## Description

### Field of the Invention

The invention is comprised in the field of devices used for securing a cable or cable bundle to a support.

More specifically, the invention relates to a securing device for securing a cable or cable bundle to a support on which said cable or cable bundle extends, of the type comprising:
- a rigid main body in the form of a bridge, comprising a platform and two facing posts extending from the platform and each of them having a free end for anchoring the securing device to the support, said platform comprising a through hole extending in an axial direction and opening up on a side between the two posts, said through hole being provided with an inner thread;
- a secondary body having a supporting surface for supporting the secondary body on the cable or cable bundle, said secondary body being slidingly coupled to the main body, such that said secondary body can slide relatively with respect to the main body in the axial direction;
- and a rod going through the through hole of the platform and being attached to the secondary body, said rod comprising an outer thread coupling with the inner thread of the through hole.

### Prior Art

Documents ES2452481T3 and ES1164633U disclose securing devices of the type mentioned above, in which the rod is threaded into the through hole. The user rotates the rod in order to thread it into the through hole, whereby the rod is moved in the axial direction and the secondary body is moved in turn until it is supported on the cable or cable bundle. The user can then continue to thread the rod into the through hole for the secondary body to press against the cable or cable bundle. The adjustment of the position of the secondary body along the axial direction is a relatively slow method and it may be hard to perform in some cases, as it requires continuously rotating the rod. Cable guiding installations are often performed in hard-to-access places with space restrictions and possibly at a great height. It is therefore important for installation operations to be performed with the greatest ease possible.

### Description of the Invention

The purpose of the invention is to provide a securing device of the type indicated above, which allows the secondary body to be positioned more quickly and in a simpler manner, and which secures the cable or cable bundle in a sufficiently robust manner.

This purpose is achieved by means of a securing device of the type indicated above, characterized in that the through hole of the main body has at least one threaded band, provided with the inner thread, and at least one unthreaded band extending along the entire length of said through hole in the axial direction; and the rod has at least one threaded band, provided with the outer thread, and at least one unthreaded band; with said threaded bands and unthreaded bands of the through hole and of the rod being complementary to one another such that, in a first angular position of said rod, said threaded band of the rod and said threaded band of the through hole are entirely facing, respectively, said unthreaded band of the through hole and said unthreaded band of the rod, there is no coupling of the outer thread of the rod with the inner thread of the through hole, and said rod can be moved freely with respect to the main body in said axial direction, and in a second angular position of said rod, said threaded band of the rod is at least partially facing said threaded band of the through hole, and there is a coupling of the outer thread of the rod with the inner thread of the through hole preventing the free movement of said rod in said axial direction. Due to the coupling of the threads, the rod can only be moved in the axial direction by means of a rotation of said rod around the axis thereof. The first and second angular positions of the rod are understood with respect to the axis of said rod, which coincides with the axis of the through hole. The angular position of the rod varies when the rod is rotated with respect to the axis thereof.

As will be seen below in the detailed description of the embodiments of the invention, this configuration allows the user to freely move the rod in the axial direction with their hand until the secondary body is supported on the cable or cable bundle, to push the rod a little more for the rod to exert the desired pressure on the cable or cable bundle, and to then slightly rotate the rod, less than one turn in any event, to couple the outer thread thereof with the inner thread of the through hole of the platform. This coupling of the two threads fixes the position of the rod and of the secondary body in the axial direction, as this assembly can only be moved in the axial direction by means of a rotation of the rod about its axis and in the proportion defined by the thread pitch. This method allows the operation of securing cables of various dimensions to be performed very quickly and with few movements of a single hand. Furthermore, it allows the pressure to be exerted by the secondary body on the cable or cable bundle to be controlled directly through the force exerted by the hand when pushing the rod. Controlling this pressure is important for the purpose of preventing damage to the cables, for example, when they are fiber optic cables. In the prior art described above, this is not always possible because the pressure exerted by the secondary body on the cable or cable bundle depends on the number of turns of the rod when it is threaded into the through hole, whereby said pressure cannot be perceived directly by the hand of the user.

Preferably, the unthreaded band of the rod is a flat face. This ensures that, in the first angular position, the threaded band of the through hole does not engage the surface of the rod and said rod can slide freely in the axial direction in the first angular position. Furthermore, the flat face on the rod has an indicator function to visually help the user to place the rod in the first angular position.

Preferably, the through hole has two threaded bands, one opposite the other, and two unthreaded bands, one opposite the other; and the rod has two threaded bands, one opposite the other, and two unthreaded bands, one opposite the other. This configuration has the advantage that, to transition from the first to the second angular position of the rod, the user must simply rotate the rod less than half a turn. Furthermore, it is easier for the user to place the rod in the first angular position.

Preferably, the secondary body and the rod are two different parts, and a free end of the rod is removably press-fit in a corresponding housing of the secondary body, such that the rod is integral with the secondary body in the axial direction but can rotate with respect to the secondary body around the axis of the rod. This configuration allows the secondary body to be more easily placed on the cable or cable bundle.

Preferably, the free ends of the posts have a hook shape defining a U-shaped notch with one side, the one located closer to the end of the post, shorter than the opposite side, and the secondary body has two legs, each of them extending adjacent to one of the two posts and being sized such that, in a first relative position of the secondary body with respect to the main body in the axial direction, the legs do not cover the notches, and in a second relative position of the secondary body with respect to the main body in the axial direction, in which the secondary body has been moved in the axial direction and has moved away from the platform, the legs at least partially cover the notches. As will be seen below in the detailed description of the embodiments, this configuration is used for anchoring the securing device to a support bar on which a cable or cable bundle arranged orthogonally to the bar is supported. This configuration, in and of itself, is already known by means of document ES1164633U mentioned above, but the combination of this configuration with the solution according to the invention is particularly advantageous. This is because, on the one hand, this configuration provides a robust anchoring even though the user applies little pressure on the cable or cable bundle through the secondary body when pushing the rod, and, on the other hand, because, since the rod can be freely moved in the axial direction, the user can very easily place the secondary body in the first relative position, which allows a fitting of the notches in the end of the posts with a corresponding shape of the bar to be performed.

The invention also comprises other detail features shown in the following detailed description of an embodiment of the invention and in the attached figures.

### Brief Description of the Drawings

The advantages and features of the invention will become apparent from the following description, in which a preferred embodiment of the invention is described in reference to the figures in a non-limiting manner with respect to the scope of the main claim.
Figure 1 is a perspective view of an assembly comprising a support, which is a bar in this example, a cable supported on the support, and a securing device anchored to the support and securing the cable.
Figure 2 is a side view of the assembly of Figure 1.
Figures 3 and 4 are, respectively, a front perspective view and a rear perspective view of the securing device with the rod removed.
Figure 5 is a front perspective view of the securing device with the rod in the first angular position.
Figure 6 is a front perspective view of the securing device with the rod in the second angular position and in a lower axial position than in Figure 5.
Figures 7, 8, 9, and 10 are four perspective views of the main body from different angles.
Figure 11 is a partial top perspective section view of the main body.
Figure 12 is a top view of the main body.
Figures 13 and 14 are two perspective views of the secondary body from different angles.
Figures 15 and 16 are two perspective views of the rod from different angles.
Figures 17, 18, 19, and 20 are, respectively, a front view, a side view, a rear view, and a top view of the rod.
Figure 21 is a perspective section view of the rod.

### Detailed Description of an Embodiment of the Invention

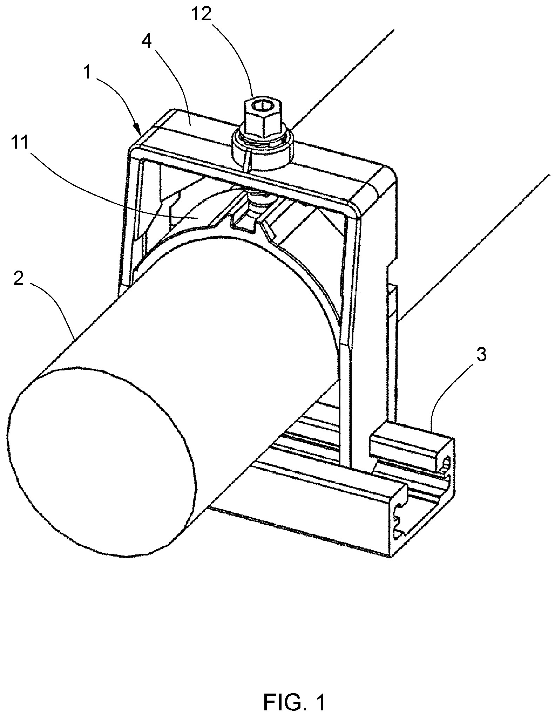

Figure 1 shows by way of example an assembly comprising a support 3, which is a bar in this example, a cable 2 supported on the support, and a securing device 1 according to a preferred embodiment of the invention. The securing device 1 is anchored to the support 3 and secures the cable 2. The cable 2 shown in the figures can also be a sheath containing a cable bundle (not shown in the figures). Similarly, the cable 2 or the sheath can be replaced with a sheathless cable bundle.

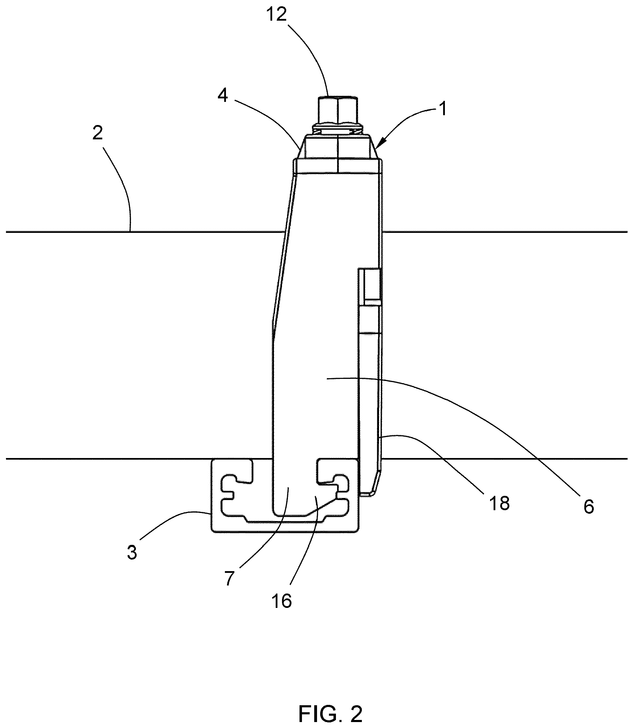

In the embodiment shown in the figures, the support 3 is a bar of the type used as a crossmember in the ladder-type cable trays, or as an individual bar which is fixed to a wall, for example, for fixing the cables 2 to said wall and thereby defining cable runs. The cable 2 extends transversely to the bar constituting the support 3 and is supported on said bar. As can be seen in Figures 1 and 2, the support 3 is a bar formed by a profile with a U-shaped section, with a base wall, two side walls, and an open wall, and in which the free ends of the side walls extend into the bar forming a rim, and each side wall has a protrusion located under said rim. As will be seen below, this shape of the bar cooperates with the hook shape of the free ends 7 of the posts 6, for anchoring the securing device 1 to the support 3 or bar.

Both the bar constituting the support 3 and the three parts forming the securing device 1 (the main body 4, the secondary body 11, and the rod 12) are made of a polymer material, preferably an electrically insulating material, such as a thermoplastic material, for example, with a surface resistivity greater than 100 MΩ (surface resistivity measured according to standard EN 62631-3-2:2016).

The main device 1 comprises a rigid main body 4 for anchoring the securing device 1 to the support 3, a secondary body 11 which is applied against the cable 2 in order to press it against the support 3 and thereby secure it, and a rod 12 which is removably attached to the secondary body 11 to push it towards the support 3.

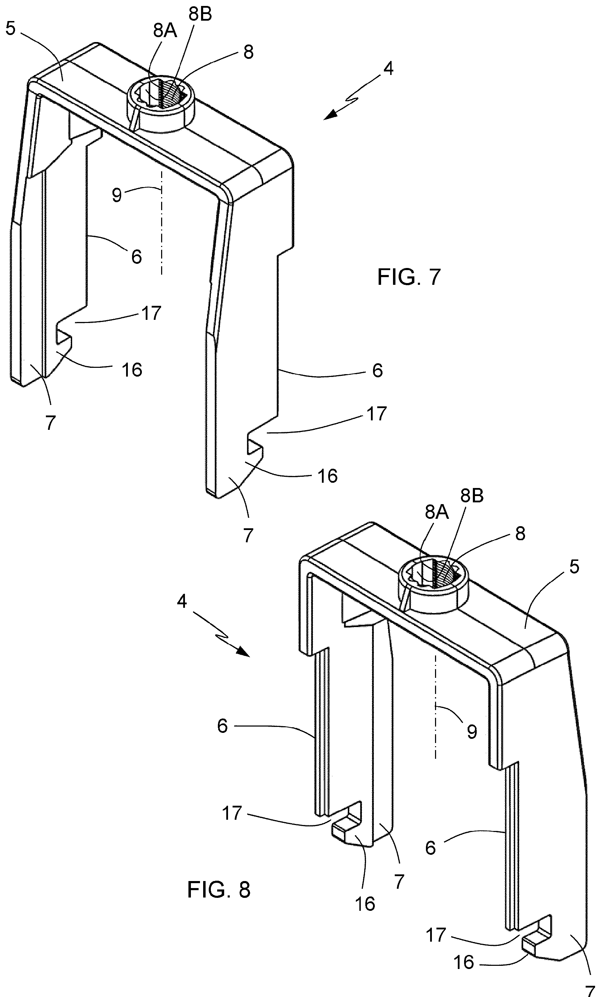

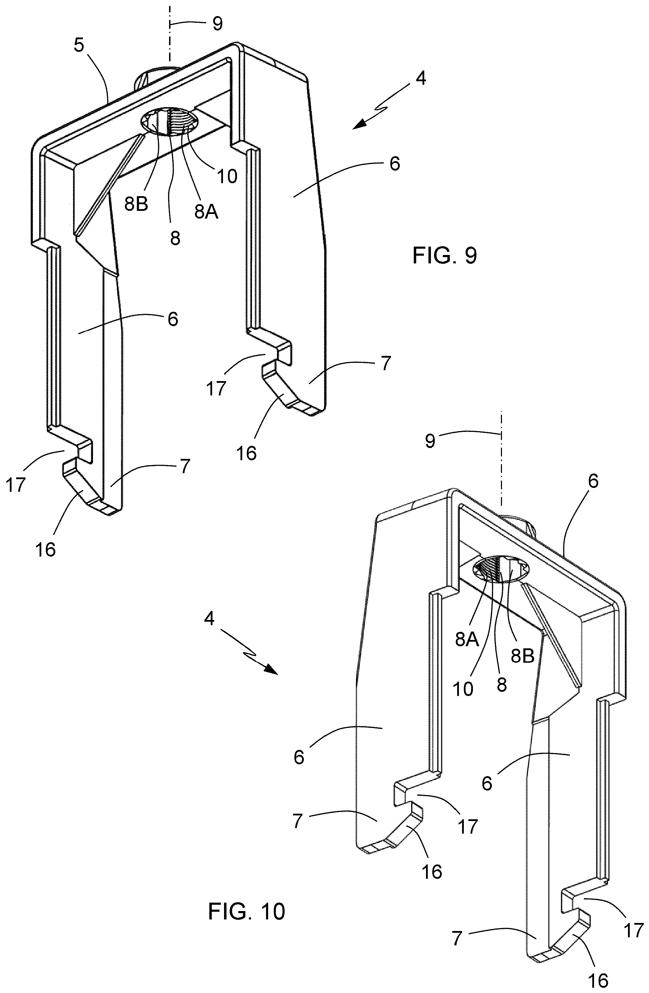

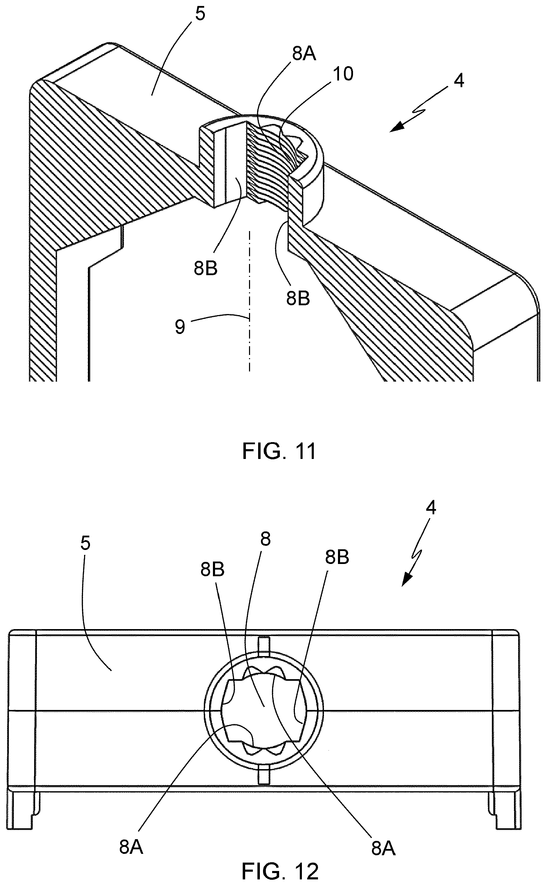

As shown in Figures 7 to 12, the main body 4 has a bridge shape and comprises a platform 5 and two facing posts 6 extending from the platform 5 and each of them having a free end 7 for anchoring the securing device 1 to the bar constituting the support 3. The platform 5 has a through hole 8 extending in an axial direction 9 and opening up on a side between the two posts 6. The through hole 8 has an inner thread 10 having the particularity of not being continuous. More specifically, the through hole 8 has two threaded bands 8A, one opposite the other, and two unthreaded bands 8B, one opposite the other. Each of the threaded bands 8A is provided with the inner thread 10. The unthreaded bands 8B extend along the entire length of the through hole 8 in the axial direction 9.

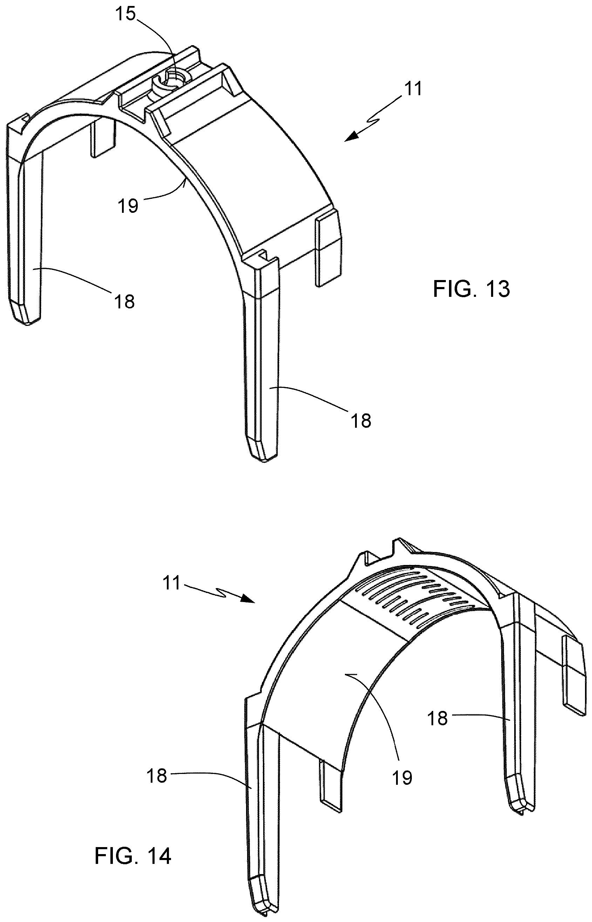

As can be seen in Figures 13 and 14, the secondary body 11 has a supporting surface 19 in the form of an arch for being supported on the cable 2 and is slidingly coupled to the two posts 6 of the main body 4, such that it can slide relatively with respect to said main body 4 in the axial direction 9. On a face opposite the supporting surface 19 in the form of an arch, the secondary body 11 has a housing 15 in the form of a cylindrical bearing with side notches to receive the free end 14 of the rod 8 in the form of a ball under pressure.

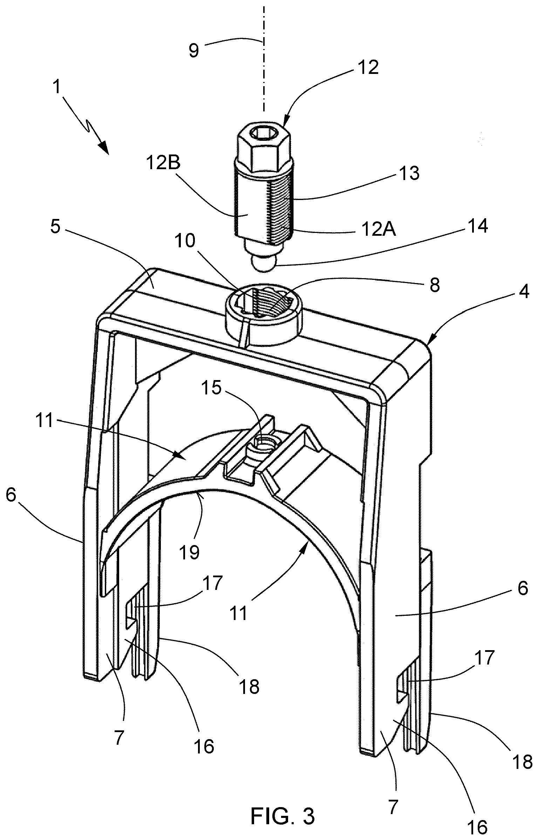

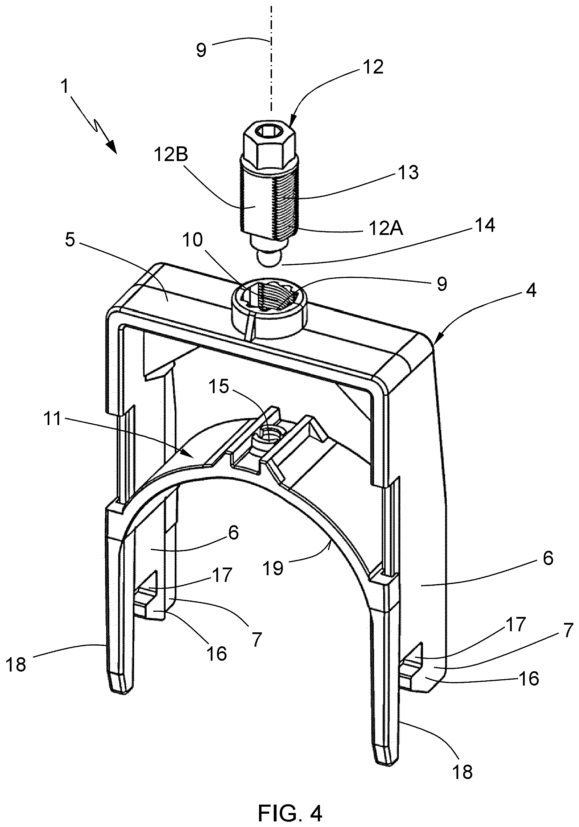

As can be seen in Figures 3 to 5, the rod 12 is introduced in the through hole 8 of the platform 5, such that it goes through same and is attached to the secondary body 11. In the depicted example, the secondary body 11 and the rod 12 are two different parts which are removably attached to one another. The attachment between the rod 12 and the secondary body 11 is performed by removably press-fitting a free end 14 of said rod 12 in the form of a ball, which is introduced under pressure in the housing 15 in the form of a cylindrical bearing, such that, when the rod 12 is coupled to the secondary body 11, it is integral with said secondary body 11 in the axial direction 9 and can rotate around the axis thereof with respect to said secondary body 11.

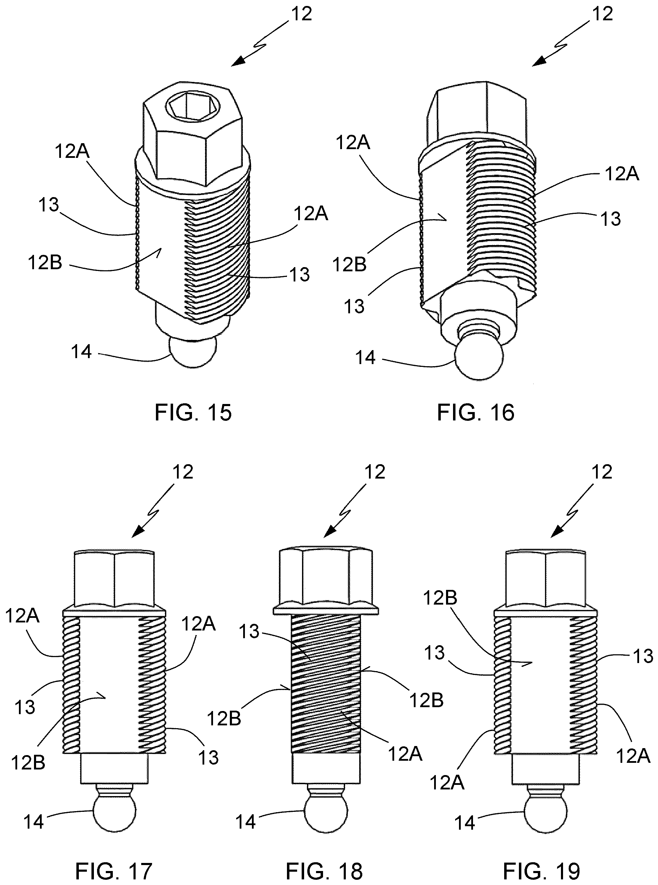

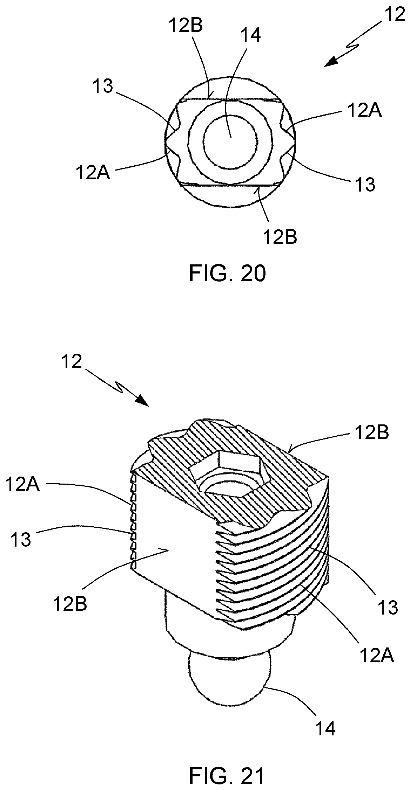

Figures 15 to 21 show in greater detail the shape of the rod 12. The rod 12 has an outer thread 13 coupling with the inner thread 10 of the through hole 8 and has the particularity of not being continuous. More specifically, the rod 8 has two threaded bands 12A, one opposite the other, and two unthreaded bands 12B, one opposite the other. The two threaded bands 12A are provided with the outer thread 13. The two unthreaded bands 12B are flat faces in planes parallel to one another and parallel to the axis of the rod 12.

The threaded bands 8A, 12A and unthreaded bands 8B, 12B of the through hole 8 and of the rod 12 are complementary to one another in two angular positions of the rod 12. In a first angular position of the rod 12, the threaded bands 12A of the rod 12 and the threaded bands 8A of the through hole 8 are entirely facing, respectively, the unthreaded bands 8B of the through hole 8 and the unthreaded bands 12B of the rod 12. In this first angular position, there is no coupling of the outer thread 13 of the rod 12 with the inner thread 10 of the through hole 8, whereby the rod 12 can be moved freely with respect to the main body 4 in the axial direction 9. In a second angular position of the rod 12, the threaded bands 12A of the rod 12 are at least partially facing the threaded bands 8A of the through hole 8. In this second angular position, there is a coupling of the outer thread 13 of the rod 12 with the inner thread 10 of the through hole 8. This coupling between the two threads 13 and 10 prevents the free movement of the rod 12 in the axial direction 9.

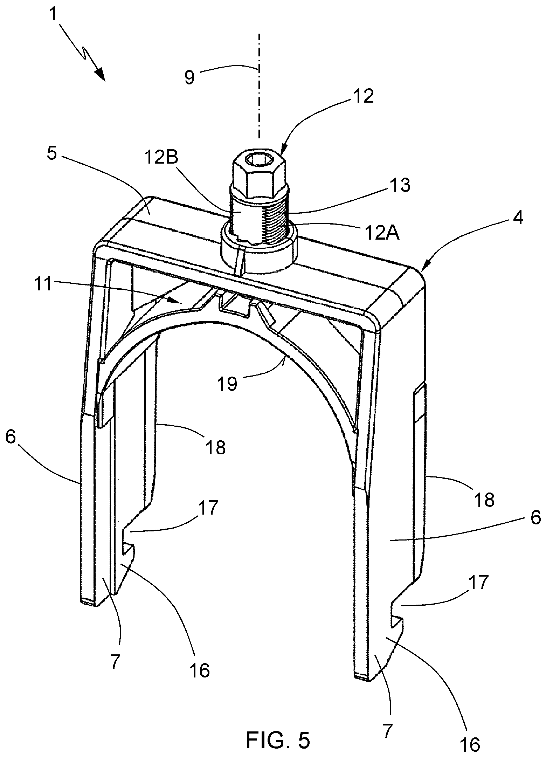

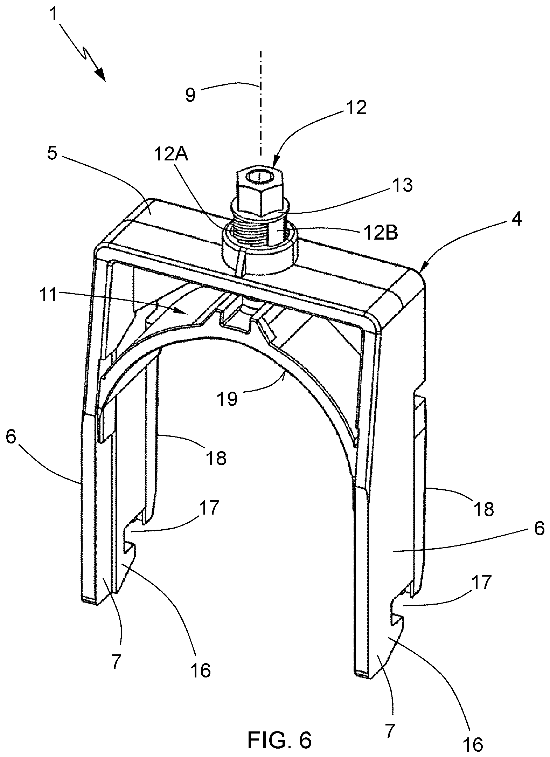

In the preferred embodiment depicted in the figures, the free ends 7 of the posts 6 have a hook shape 16 which is particularly suitable for anchoring the securing device 1 to a bar of the type shown in the figures, constituting the support 3. The hook shape 16 at the free ends 7 of the posts 6 defines a U-shaped notch 17 with one side, the one located closer to the end of the post 6, shorter than the opposite side. The secondary body 11 has two legs 18, each of them extending adjacent to one of the two posts 6. The legs 18 are sized to cooperate with the hook shape 16 of the free ends 7 of the posts 6, for the purpose of assuring the anchoring of the securing device 1. In a first relative position of the secondary body 11 with respect to the main body 4 in the axial direction 9, the legs 18 do not cover the notches 17. In this first position, shown in Figure 5, the notches 17 are completely open and the ends 7 of the posts 6 can be introduced in the bar forming the support 3. In a second relative position of the secondary body 11 with respect to the main body 4 in the axial direction 9, in which said secondary body 11 has been moved in the axial direction 9 and has moved away from the platform 5, the legs 18 at least partially cover the notches 17. In this second position, shown in Figures 2 and 6, the notches are partially closed by the legs 18, and the ends 7 of the posts 6 are anchored in the bar forming the support 3.

The operations performed by the user for anchoring the securing device 1 to the bar constituting the support 3, and for securing the cable 2 to said bar at the same time, will now be described. Firstly, the user places the ends 7 of the posts 6 in the bar constituting the support 3. To that end, the secondary body 11 is in the first relative position with respect to the main body 4 in the axial direction 9, as explained above. The user places the rod 12 in the first angular position, shown in Figure 5, whereby the rod 12 can slide freely in the axial direction 9. The user then pushes the rod 12 towards the bar constituting the support 3 (not shown in Figure 5) until the supporting surface 19 of the secondary body 11 is supported on the cable 2 (not shown in Figure 5) placed on the bar, and exerts with one hand the desired pushing force in the axial direction 9 for the cable 2 to be gripped between the supporting surface 19 and the bar. The user then rotates the rod 12 about its axis less than 180°, the rod 12 thereby transitioning to the second angular position shown in Figure 6, in which the outer thread 13 and the inner thread 10 are coupled to one another. This coupling of the threads 13 and 10 prevents the free movement of the rod 12 in the axial direction 9, whereby the cable 2 is firmly secured to the bar, as shown in Figures 1 and 2. At the same time, the movement of the rod 12 towards the bar has caused the secondary body 11 to transition to the second relative position with respect to the main body 4 in the axial direction 9, in which the legs 18 cover the notches 17, whereby the secondary body 11 is firmly anchored to the bar by the free ends 7 of the posts 6, as can also be seen in Figures 1 and 2. To release the cable 2 and the securing device 1, the user simply rotates the rod 12 less than 180° to the first angular position and lifts the rod, causing it to slide freely in the axial direction 9.

## Claims

1. A securing device (1) for securing a cable (2) or a cable bundle to a support (3) on which said cable (2) or cable bundle extends, said securing device (1) comprising:
- a rigid main body (4) in the form of a bridge, comprising a platform (5) and two facing posts (6) extending from said platform (5) and each of them having a free end (7) for anchoring said securing device (1) to said support (3), said platform (5) comprising a through hole (8) extending in an axial direction (9) and opening up on a side between said two posts (6), said through hole (8) being provided with an inner thread (10);
- a secondary body (11) having a supporting surface (19) for supporting said secondary body (11) on said cable (2) or cable bundle, said secondary body (11) being slidingly coupled to said main body (4), such that said secondary body (11) can slide relatively with respect to said main body (4) in said axial direction (9);
- a rod (12) going through said through hole (8) of the platform (5) and being attached to said secondary body (11), said rod (12) comprising an outer thread (13) coupling with said inner thread (10) of the through hole (8);
**characterized in that** said through hole (8) has at least one threaded band (8A), provided with said inner thread (10), and at least one unthreaded band (8B) extending along the entire length of said through hole (8) in said axial direction (9); and said rod (12) has at least one threaded band (12A), provided with said outer thread (13), and at least one unthreaded band (12B); with said threaded bands (8A, 12A) and unthreaded bands (8B, 12B) of the through hole (8) and of the rod (12) being complementary to one another such that, in a first angular position of said rod (12), said threaded band (12A) of the rod (12) and said threaded band (8A) of the through hole (8) are entirely facing, respectively, said unthreaded band (8B) of the through hole (8) and said unthreaded band (12B) of the rod (12), there is no coupling of the outer thread (13) of the rod (12) with the inner thread (10) of the through hole (8), and said rod (12) can be moved freely with respect to said main body (4) in said axial direction (9), and in a second angular position of said rod (12), said threaded band (12A) of the rod (12) is at least partially facing said threaded band (8A) of the through hole (8), and there is a coupling of the outer thread (13) of the rod (12) with the inner thread (10) of the through hole (8) preventing the free movement of said rod (12) in said axial direction (9).

2. The securing device (1) according to claim 1, **characterized in that** said unthreaded band (12B) of the rod (12) is a flat face.

3. The securing device (1) according to any one of claims 1 or 2, **characterized in that** said through hole (8) has two of said threaded bands (8A), one opposite the other, and two of said unthreaded bands (8B), one opposite the other; and said rod (12) has two of said threaded bands (12A), one opposite the other, and two of said unthreaded bands (12B), one opposite the other.

4. The securing device (1) according to any one of claims 1 to 3, **characterized in that** said secondary body (11) and said rod (12) are two different parts, and a free end (14) of said rod (12) is removably press-fit in a corresponding housing (15) of said secondary body (11), such that said rod (12) is integral with said secondary body (11) in said axial direction (9) and said rod (12) can rotate with respect to said secondary body (11) around the axis of said rod (12).

5. The securing device (1) according to any one of claims 1 to 4, **characterized in that** the free ends (7) of said posts (6) have a hook shape (16) defining a U-shaped notch (17) with one side, the one located closer to the end of the post (6), shorter than the opposite side, and said secondary body (11) has two legs (18), each of said two legs (18) extending adjacent to one of said two posts (6) and being sized such that, in a first relative position of said secondary body (11) with respect to said main body (4) in said axial direction (9), said legs (18) do not cover said notches (17), and in a second relative position of said secondary body (11) with respect to said main body (4) in said axial direction (9), in which said secondary body (11) has been moved in said axial direction (9) and has moved away from said platform (5), said legs (18) at least partially cover said notches (17).

## Patentansprüche

1. Eine Sicherungsvorrichtung (1) zum Sichern eines Kabels (2) oder eines Kabelbündels an einer Halterung (3), an der sich das Kabel (2) oder das Kabelbündel erstreckt, wobei die Sicherungsvorrichtung (1) aufweist:
- einen starren Hauptkörper (4) in Form einer Brücke, der eine Plattform (5) und zwei einander gegenüberliegende Pfosten (6) umfasst, die sich von der Plattform (5) erstrecken und jeweils ein freies Ende (7) zur Verankerung der Sicherungsvorrichtung (1) an der Halterung (3) aufweisen, wobei die Plattform (5) ein Durchgangsloch (8) umfasst, das sich in einer axialen Richtung (9) erstreckt und an einer Seite zwischen den beiden Pfosten (6) mündet, wobei das Durchgangsloch (8) mit einem Innengewinde (10) versehen ist;
- einen Sekundärkörper (11) mit einer Stützfläche (19) zum Abstützen des Sekundärkörpers (11) auf dem Kabel (2) oder Kabelbündel, wobei der Sekundärkörper (11) gleitend mit dem Hauptkörper (4) verbunden ist, so dass der Sekundärkörper (11) relativ zum Hauptkörper (4) in der axialen Richtung (9) gleiten kann;
- eine Stange (12), die durch das Durchgangsloch (8) der Plattform (5) verläuft und an dem Sekundärkörper (11) befestigt ist, wobei die Stange (12) ein Außengewinde (13) aufweist, das mit dem Innengewinde (10) der Durchgangsloch (8) in Eingriff steht;
**dadurch gekennzeichnet, dass** das Durchgangsloch (8) mindestens einen mit dem Innengewinde (10) versehenen Gewindestreifen (8A) und mindestens einen gewindelosen Streifen (8B) aufweist, die sich entlang der gesamten Länge des Durchgangslochs (8) in axialer Richtung (9) erstrecken; und die Stange (12) mindestens einen Gewindestreifen (12A), der mit dem Außengewinde (13) versehen ist, und mindestens einen gewindelosen Streifen (12B) aufweist; wobei die Gewindestreifen (8A, 12A) und die gewindelosen Streifen (8B, 12B) des Durchgangslochs (8) und der Stange (12) so komplementär zueinander sind, dass in einer ersten Winkelposition der Stange (12), in der der Gewindestreifen (12A) der Stange (12) und der Gewindestreifen (8A) des Durchgangslochs (8) jeweils vollständig dem gewindelosen Streifen (8B) des Durchgangslochs (8) und dem gewindelosen Streifen (12B) der Stange (12) gegenüberliegen, keine Verbindung des Außengewindes (13) der Stange (12) mit dem Innengewinde (10) des Durchgangslochs (8) besteht, und die Stange (12) in Bezug auf den Hauptkörper (4) in der axialen Richtung (9) frei bewegbar ist, und in einer zweiten Winkelposition der Stange (12) der Gewindestreifen (12A) der Stange (12) zumindest teilweise dem Gewindestreifen (8A) des Durchgangslochs (8) gegenüberliegt, und so eine Verbindung des Außengewindes (13) der Stange (12) mit dem Innengewinde (10) der Durchgangsloch (8) besteht, die die freie Bewegung der Stange (12) in der axialen Richtung (9) verhindert.

2. Die Sicherungsvorrichtung (1) nach Anspruch 1, **dadurch gekennzeichnet, dass** der gewindelose Streifen (12B) der Stange (12) eine flache Fläche ist.

3. Die Sicherungsvorrichtung (1) nach einem der Ansprüche 1 oder 2, **dadurch gekennzeichnet, dass** das Durchgangsloch (8) zwei der Gewindestreifen (8A), die einander gegenüberliegen, und zwei der gewindelosen Streifen (8B), die einander gegenüberliegen, aufweist; und die Stange (12) zwei der Gewindestreifen (12A), die einander gegenüberliegen, und zwei der gewindelosen Streifen (12B), die einander gegenüberliegen, aufweist.

4. Die Sicherungsvorrichtung (1) nach einem der Ansprüche 1 bis 3, **dadurch gekennzeichnet, dass** der Sekundärkörper (11) und die Stange (12) zwei verschiedene Teile sind und ein freies Ende (14) der Stange (12) lösbar in einer korrespondierenden Aufnahme (15) des Sekundärkörpers (11) eingepresst ist, sodass die Stange (12) in axialer Richtung (9) mit dem Sekundärkörper (11) einteilig ist und sich die Stange (12) relativ zum Sekundärkörper (11) um die Achse der Stange (12) drehen kann.

5. Die Sicherungsvorrichtung (1) nach einem der Ansprüche 1 bis 4, **dadurch gekennzeichnet, dass** die freien Enden (7) der Pfosten (6) eine Hakenform (16) aufweisen, die eine U-förmige Aussparung (17) bildet, wobei eine Seite, die dem Ende des Pfostens (6) näher gelegen ist, kürzer ist als die gegenüberliegende Seite, und dass der Sekundärkörper (11) zwei Schenkel (18) aufweist, wobei sich jeder der beiden Schenkel (18) benachbart zu einem der beiden Pfosten (6) erstreckt und so dimensioniert ist, dass in einer ersten relativen Position des Sekundärkörpers (11) in Bezug auf den Hauptkörper (4) in der axialen Richtung (9) die Schenkel (18) die Aussparungen (17) nicht überdecken, und in einer zweiten relativen Position des Sekundärkörpers (11) in Bezug auf den Hauptkörper (4) in der axialen Richtung (9), in der der Sekundärkörper (11) in der axialen Richtung (9) verschoben wurde und sich von der Plattform (5) entfernt hat, die Schenkel (18) die Aussparungen (17) zumindest teilweise überdecken.

## Revendications

1. Dispositif de fixation (1) d'un câble (2) ou d'un faisceau de câbles à un support (3) sur lequel s'étend ledit câble (2) ou faisceau de câbles, ledit dispositif (1) de fixation comprenant :
- un corps principal rigide (4) sous forme de pont, comprenant une plateforme (5) et deux montants (6) en vis-à-vis s'étendant depuis ladite plateforme (5) et ayant chacun une extrémité libre (7) d'ancrage dudit dispositif de fixation (1) audit support (3), ladite plateforme (5) comprenant un trou traversant (8) s'étendant dans une direction axiale (9) et ouvrant sur un côté entre lesdits deux montants (6), ledit trou traversant (8) étant pourvu d'un filetage intérieur (10) ;
- un corps secondaire (11) présentant une surface d'appui (19) pour supporter ledit corps secondaire (11) sur ledit câble (2) ou faisceau de câbles, ledit corps secondaire (11) étant couplé par glissement audit corps principal (4), de sorte que ledit corps secondaire (11) puisse coulisser relativement par rapport audit corps principal (4) dans ladite direction axiale (9) ;
- une tige (12) traversant ledit trou traversant (8) de la plateforme (5) et étant fixée audit corps secondaire (11), ladite tige (12) comprenant un filetage extérieur (13) couplant audit filetage intérieur (10) du trou traversant (8) ;
**caractérisé en ce que** ledit trou traversant (8) présente au moins une bande filetée (8A), pourvue dudit filetage intérieur (10), et au moins une bande non filetée (8B) s'étendant sur toute la longueur dudit trou traversant (8) dans ladite direction axiale (9) ; et ladite tige (12) présente au moins une bande filetée (12A), pourvue dudit filetage extérieur (13), et au moins une bande non filetée (12B) ; lesdites bandes filetées (8A, 12A) et bandes non filetées (8B, 12B) du trou traversant (8) et de la tige (12) étant complémentaires les unes aux autres de sorte que, dans une première position angulaire de ladite tige (12), ladite bande filetée (12A) de la tige (12) et ladite bande filetée (8A) du trou traversant (8) font entièrement face, respectivement, à ladite bande non filetée (8B) du trou traversant (8) et à ladite bande non filetée (12B) de la tige (12), il n'y a pas de couplage du filetage extérieur (13) de la tige (12) avec le filetage intérieur (10) du trou traversant (8), et ladite tige (12) peut être déplacée librement par rapport audit corps principal (4) dans ladite direction axiale (9), et dans une deuxième position angulaire de ladite tige (12), ladite bande filetée (12A) de la tige (12) est au moins partiellement en face de ladite bande filetée (8A) du trou traversant (8), et il existe un couplage du filetage extérieur (13) de la tige (12) avec le filetage intérieur (10) du trou traversant (8) empêchant le libre mouvement de ladite tige (12) dans ladite direction axiale (9).

2. Dispositif de fixation (1) selon la revendication 1, **caractérisé en ce que** ladite bande non filetée (12B) de la tige (12) est une face plate.

3. Dispositif de fixation (1) selon l'une quelconque des revendications 1 ou 2, **caractérisé en ce que** ledit trou traversant (8) présente deux desdites bandes filetées (8A), l'une opposée à l'autre, et deux desdites bandes non filetées (8B), l'une opposée à l'autre ; et ladite tige (12) présente deux desdites bandes filetées (12A), l'une opposée à l'autre, et deux desdites bandes non filetées (12B), l'une opposée à l'autre.

4. Dispositif de fixation (1) selon l'une quelconque des revendications 1 à 3, **caractérisé en ce que** ledit corps secondaire (11) et ladite tige (12) sont deux parties différentes, et une extrémité libre (14) de ladite tige (12) est amoviblement emboîtée à force dans un logement correspondant (15) dudit corps secondaire (11), de sorte que ladite tige (12) est solidaire dudit corps secondaire (11) dans ladite direction axiale (9) et que ladite tige (12) peut tourner par rapport audit corps secondaire (11) autour de l'axe de ladite tige (12).

5. Dispositif de fixation (1) selon l'une quelconque des revendications 1 à 4, **caractérisé en ce que** les extrémités libres (7) desdits montants (6) présentent une forme de crochet (16) définissant une encoche en forme de U (17) avec un côté, celui situé plus proche de l'extrémité du montant (6), plus court que le côté opposé, et ledit corps secondaire (11) présente deux pieds (18), chacun desdits deux pieds (18) s'étendant adjacent à l'un desdits deux montants (6) et étant dimensionné de sorte que, dans une première position relative dudit corps secondaire (11) par rapport audit corps principal (4) dans ladite direction axiale (9), lesdits pieds (18) ne recouvrent pas lesdites encoches (17), et dans une deuxième position relative dudit corps secondaire (11) par rapport audit corps principal (4) dans ladite direction axiale (9), dans laquelle ledit corps secondaire (11) a été déplacé dans ladite direction axiale (9) et s'est éloigné de ladite plateforme (5), lesdits pieds (18) recouvrent au moins partiellement lesdites encoches (17).
